# FASCICULE DE BREVET EUROPEEN

(11) **EP 0 843 931 B1**
(45) Date de publication et mention de la délivrance du brevet: **25.06.2003**
(21) Numéro de dépôt: 96927738.3
(22) Date de dépôt: 02.08.1996
(51) Int. Cl.: H04L 12/40

(54) **PROCEDE DE COMMUNICATION SUR UN BUS OPTIQUE A COHABITATION DE DEBITS DIFFERENTS**
ÜBERTRAGUNGSVERFAHREN ÜBER EINEN OPTISCHEN BUS MIT GLEICHZEITIG VERSCHIEDENEN DATENRATEN
COMMUNICATION METHOD USING AN OPTICAL BUS SIMULTANEOUSLY SUPPORTING DIFFERENT DATA RATES

(30) Priorité: 08.08.1995 FR 9509607
(43) Date de publication de la demande: 27.05.1998
(73) Titulaire: THALES AVIONICS S.A., 78141 Vélizy Villacoublay Cédex (FR)
(72) Inventeur: TOILLON, Patrice Thales Avionics S.A., 78141 Vélizy Villacoublay Cédex (FR)
(74) Mandataire: Chaverneff, Vladimir
(86) Numéro de dépôt international: FR9601239
(87) Numéro de publication internationale: WO97006621

(56) Documents cités:
- EP-A- 0 447 749
- EP-A- 0 570 293
- FR-A- 2 553 950
- GB-A- 2 074 425
- COMPUTER COMMUNICATIONS, vol. 16, no. 6, 1 Juin 1993, pages 350-365, XP000303591 ARUN AYYAGARI ET AL: "MODELLING AND ANALYSIS OF A DATA COMMUNICATION PROTOCOL FOR INTEGRATED CONTROL OF ADVANCED AIRCRAFT"
- PROCEEDINGS OF THE DIGITAL AVIONICS SYSTEMS CONFERENCE, SEATTLE, OCT. 5 - 8, 1992, no. CONF. 11, 5 Octobre 1992, INSTITUTE OF ELECTRICAL AND ELECTRONICS ENGINEERS, pages 586-591, XP000366742 BEACKEN M J: "A HIGH PERFORMANCE OPTICAL BUS FOR DIGITAL AVIONICS SYSTEMS"
- PROCEEDINGS OF THE IEEE/AIAA 5TH DIGITAL AVIONICS SYSTEMS CONFERENCE, Novembre 1983, SEATTLE WA,US, pages 12.4.1-12.4.6, XP000571120 C. R. HUSBANDS ET AL.: "THE APPLICATION OF MULTIPLE SPEED DATA RATE TRANSMISSION TO A MIL-STD-1773 DATA BUS STRUCTURE"

## Description

La présente invention se rapporte à un procédé de communication sur un bus à cohabitation de débits différents.

Des bus de communication multiplexés commencent à être utilisés en avionique, et des versions optiques de ces bus apparaissent. La norme ARINC 629 se rapporte à de tels bus. Actuellement, le débit d'informations sur un tel bus est normalisé à 2 Mbits/s, étant donné que certains équipements rattachés à ce bus ne peuvent fournir un débit plus élevé.

Toutefois, étant donné qu'un bus optique peut supporter un débit d'informations très supérieur à 2 Mbits/s et que des équipements avioniques ou des regroupements d'équipements sous forme d'unité locale, rattachés à ce bus peuvent également émettre et/ou recevoir des informations à un débit supérieur à cette valeur, on peut envisager de faire passer simultanément sur le même bus des informations à débits différents.

On connaît d'après le document EP 0 447 749 un procédé de transmission de données à débits différents, mais le codage du débit est assuré par un champ d'information explicite commun à un ensemble d'intervalles de temps groupés en trame.

La présente invention a pour objet un procédé de communication sur un bus, en particulier un bus optique, auquel sont reliés des équipements fonctionnant en émission et/ou en réception à des débits maximaux ou optimaux différents, ce procédé permettant de faire passer simultanément sur le bus des informations à des débits différents.

Le procédé conforme à l'invention est un procédé selon lequel on utilise un protocole de transmission unique à multiplexage temporel sur le bus, tous les équipements étant constamment à l'écoute du bus, les équipements ayant à émettre des informations les insérant dans des fenêtres temporelles définies pour l'équipement lui-même et en fonction de l'activité des autres équipements, chaque équipement récepteur détectant l'activité du bus, et recrée l'information qui lui est destinée, et il est caractérisé par le fait que les informations émises sont groupées en trames se composant chacune d'une ou de plusieurs chaînes de mots associées chacune à un échange d'informations élémentaires entre deux ou plusieurs équipements de même débit d'informations, des trames regroupant des chaînes de mots relatives à des débits d'informations différents, chaque équipement récepteur reconnaissant le type de débit, chaque chaîne de mots étant précédée d'un profil de synchronisation de l'identificateur de données indiquant la valeur du débit de ces informations.

La présente invention sera mieux comprise à la lecture de la description détaillée de deux modes de réalisation, pris à titre d'exemples non limitatifs et illustrés par le dessin annexé, sur lequel :
- la figure 1 est un bloc-diagramme partiel d'un bus optique linéaire monofibre fonctionnant selon le procédé de l'invention, avec une partie des équipements qui lui sont reliés,
- la figure 2 est un bloc-diagramme partiel d'un système avionique à configuration en étoile, fonctionnant selon le procédé de l'invention,
- la figure 3 est un bloc-diagramme simplifié d'une interface entre un équipement et un bus fonctionnant selon le procédé de l'invention,
- la figure 4 est un chronogramme, sous forme temporelle, d'informations émises conformément au procédé de l'invention, et
- la figure 5 est un chronogramme, sous forme temporelle, d'informations émises conformément au procédé de l'invention, représentant l'activité de plusieurs équipements.

L'invention est décrite ci-dessous en référence à un système de communication d'aéronef, mais non exclusivement limitée à une telle application, et qu'elle peut être mise en oeuvre dans divers autres systèmes comportant plusieurs équipements émetteurs et/ou récepteurs d'informations dont les débits maximaux ou optimaux sont différents et qui sont reliés à un bus optique ou électrique. Il est bien entendu que le bus reliant les différents équipements du système n'est pas nécessairement un bus en un seul tronçon, et qu'il peut être divisé en plusieurs tronçons reliant les différents équipements pour former une architecture en "étoile" par exemple. Dans les exemples décrits ci-dessous, les deux seuls débits envisagés sont 2 et 8 Mbits/s, mais il est également bien entendu que d'autres valeurs de débits peuvent être définies, et que l'invention n'est pas limitée à deux débits différents, mais peut s'appliquer à un plus grand nombre de débits différents.

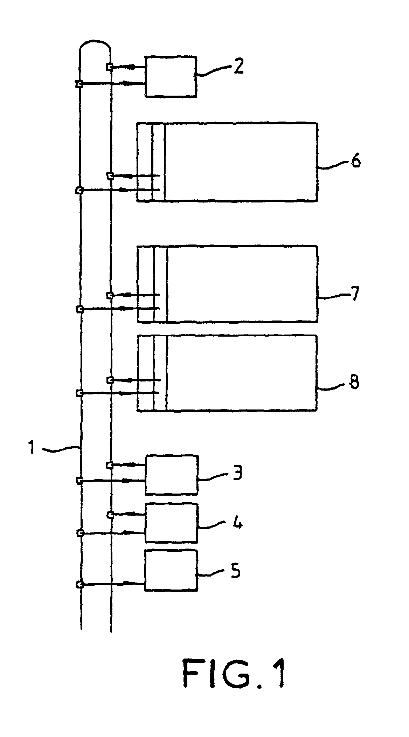

Le système partiellement représenté en figure 1 comporte un bus 1 en fibre optique auquel sont reliés divers équipements avioniques. Ces équipements sont, par exemple, des éléments simples tels que des capteurs et des actuateurs 2, 3, 4 et 5, une baie 6 regroupant sous forme d'unité locale plusieurs modules avioniques (modules d'acquisition , d'entrée/sortie, de calcul et de visualisation par exemple), et des équipements complexes 7, 8 (par exemple des postes HF, des asservissements, des équipements passerelles vers d'autres systèmes de communication,...). Parmi les éléments 2 à 5, l'élément 5 a uniquement une fonction de réception d'informations (par exemple un dispositif de visualisation simple ou un actuateur). Les entrées et les sorties d'informations des équipements précités sont reliées au bus 1. Pour une meilleure clarté du dessin, la fibre 1 a été représentée pliée en "U", dont une des branches est reliée aux sorties des équipements, et l'autre branche à leurs entrées, mais il est bien entendu que cette fibre peut être rectiligne ou avoir une forme quelconque et que les raccordements ("laps") optiques de liaison aux entrées et aux sorties des équipements peuvent, pour chacun de ces équipements, être rapprochés l'un de l'autre, ou bien être constitués par un coupleur unique bidirectionnel.

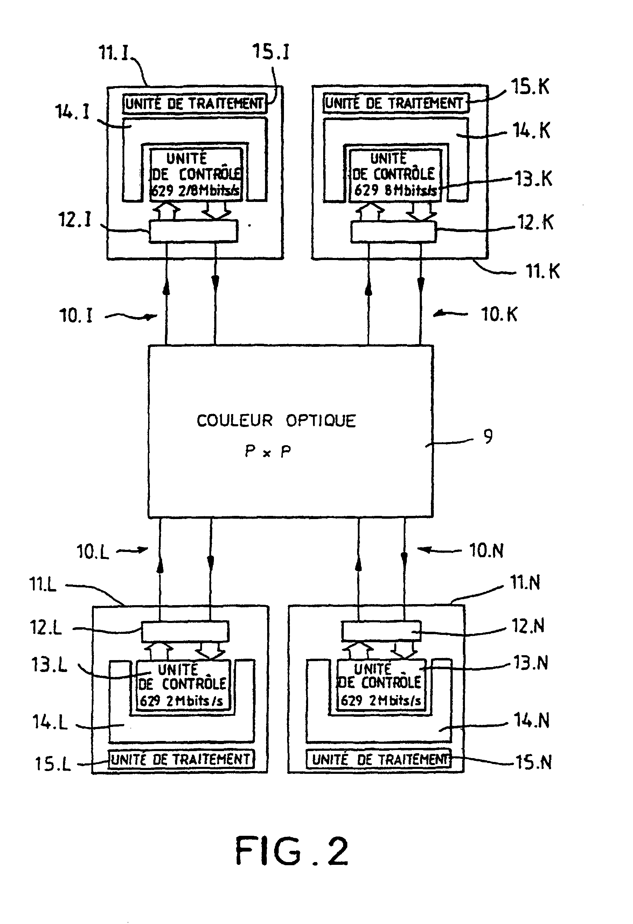

Le système représenté en figure 2 a une structure en "étoile". La partie centrale commune est constitué par un coupleur optique 9 à P entrées et P sorties à partir duquel rayonnent N fibres optiques 10.1 à 10 N reliant ce coupleur aux N différents équipements 11.1 à 11.N du système, P étant supérieur ou égal à N. Les trajets émission et réception dans chacun des tronçons de raccordement de l'équipement au coupleur sont strictement séparés.

Chacun des équipements représentés en figure 2 (11.1, 11.K, 11.L et 11.N) est supposé émettre et recevoir des informations. Les interfaces de tous ces équipements sont aptes à recevoir les informations à 2 et 8 Mbits/s pour pouvoir reconnaître celui ou ceux pouvant convenir à leurs équipements. On suppose que les équipements 11.L et 11.N n'émettent qu'à un seul débit de 2 Mbits/s alors que l'équipement 11.K émet à 8 Mbits/s et l'équipement 11.1 peut émettre à l'un et/ou l'autre de ces deux débits. Chacun des équipements comporte une interface optique/électrique série, respectivement 12.1 à 12.N, adaptée au débit à émettre. Cette interface est suivie d'une unité de contrôle 13.1 à 13.N, de circuits d'environnement de personnalisation et d'échange 14.1 à 14.N respectivement (en fait, les circuits électroniques et/ou électriques spécifiques de chaque équipement). Les différents circuits de chaque équipement sont gérés par une unité de traitement, respectivement 15.1 à 15.N. Bien entendu, le système peut comporter d'autres types d'équipements composés différemment (réception seule, pas d'unité de traitement pour des équipements rudimentaires tels que des capteurs, des convertisseurs, des voyants, ...).

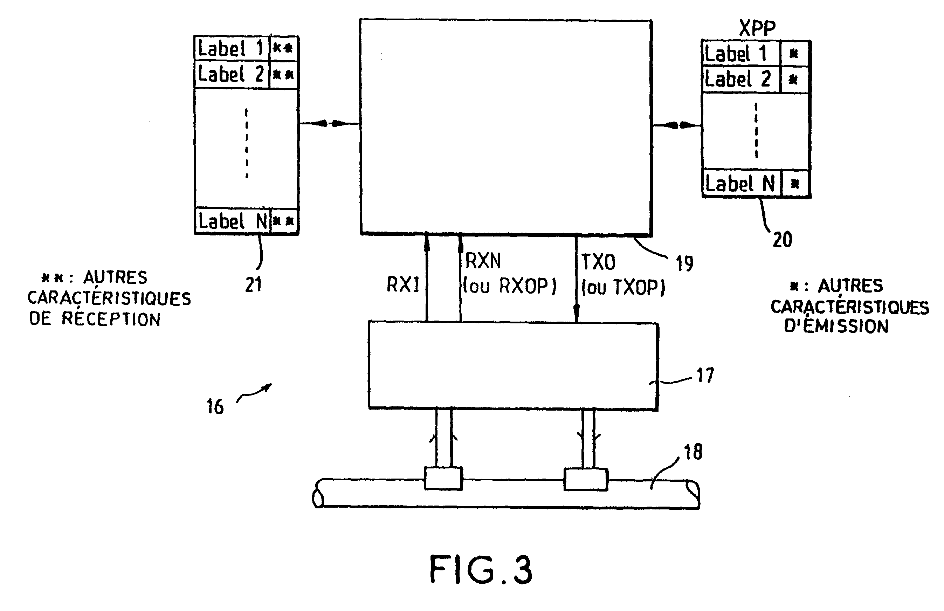

On a représenté en figure 3 un mode de réalisation possible d'une interface optique/électronique 16 pouvant être utilisée dans les équipements des figures 1 et 2. L'interface 16 comprend essentiellement un convertisseur optique/électronique 17 couplé au bus optique 18, les entrée et sortie électriques du convertisseur 17 étant reliées à une unité 19 de contrôle et de gestion des communications. Le convertisseur 17 constitue l'élément principal actif de la couche physique de l'interface, tandis que l'unité 19 constitue l'élément principal actif de la couche logique. Le format spatial logique et le format temporel des informations échangées entre les équipements sont conformes à la norme ARINC 629 (qui, il faut le noter, ne reconnaît que le débit à 2Mbits/s). Toutefois, le procédé de l'invention prévoit au moins deux débits différents, ce qui implique un format physique différent des messages échangés, sans pour autant modifier le protocole d'accès au bus, afin d'assurer la comptabilité ascendante avec les systèmes existants respectant la norme ARINC 629. Ce procédé est basé sur l'écoute de l'activité du bus. Cette activité est indépendante du débit ainsi que du format (transitions ou impulsions) des informations physiques circulant sur le bus. L'activité physique du bus est restituée par le convertisseur 17, puis interprétée par le contrôleur 19, ce qui permet à ce dernier de gérer les signaux de contrôle des compteurs ("timers") généraux de cadencement du format temporel des informations ("timers" dénommés TG, ASG/SG, PSG dans la norme ARINC 629) circulant sur le bus. Les caractéristiques essentielles du procédé de l'invention sont les suivantes.

Le débit d'informations circulant sur le bus est un paramètre que l'on programme dans la partie émission des équipements, et non pas dans leur partie réception, sauf pour assurer la surveillance de l'émission.

Les trames émises sur le bus se composent de chaînes de mots ("wordstrings") émises par des équipements. La succession de chaine de mots et les caractéristiques de chaque chaîne de mots d'une même trame sont programmables (dans une table d'émission XPP, référencée 20 figure 3 et reliée à l'unité 19) et peut comporter des chaînes de mots à débits différents en fonction des capacités des récepteurs correspondants. Les informations circulant sur le bus sont organisées en trames "majeures" correspondant à un balayage complet de la table d'émission 20. Ces trames majeures se subdivisent en trames "mineures" dont chacune correspond à un message, c'est-à-dire à un cycle programmé d'enchaînement de chaînes de mots indépendantes associées chacune à un échange d'informations élémentaires entre deux ou plusieurs équipements. L'unité 19 réalise essentiellement les opérations suivantes :
- en émission :- sélection des débits d'émission de chacune des chaînes de mots à l'intérieur d'un message d'information.
- en réception :

- détection des bits de synchronisation des mots d'identification de données pour la détermination du débit de chaque chaîne de mots
- acquisition et contrôle des mots d'identification de données, et des données elles-mêmes de 2 et 8 Mbits/s
- surveillance des débits unitaires de chaque chaîne de mots reçue et de la validité de chacune de ces chaînes de mots.

A l'émission, la programmation du débit est assurée statiquement. On mémorise dans la table d'émission la structure des différents messages comprenant chacun une ou plusieurs chaînes de mots, chacune de ces chaînes se rapportant à un ou plusieurs équipements déterminés de même classe, ce qui fait qu'un message peut renfermer une succession de chaînes de mots à des débits différents. Bien entendu, l'unité 19 doit surveiller les changements de débit d'une chaîne de mots à l'autre (comme, d'ailleurs, tous les autres paramètres des informations émises), pour éviter qu'une simple faute se produisant dans l'émetteur n'entraîne le passage du débit de 8 Mbits/s à celui de 2 Mbits/s, ce qui aurait pour conséquence l'augmentation de la durée d'émission d'un message et la perturbation des émissions postérieures des autres équipements, et donc la modification du déroulement cyclique des émissions.

La détermination du débit instantané de l'émission est réalisée dès le début de la réception de chaque chaîne de mots émise : aussitôt après la détection de la synchronisation message ("SYNC MSG"), le profil de synchronisation ("SYNC LABEL") du mot d'identificateur de données de la première chaîne de mots du message contient l'information de débit de cette chaîne de mots. Les profils de synchronisation ("SYNC LABEL") des mots d'identificateurs de données des chaînes de mots consécutives contiennent l'information de débit de ces chaînes respectives. La surveillance du débit de chacune des chaînes de mots est réalisée par le contrôle de la cohérence avec la programmation statique faite dans les descripteurs de réception dédiés à la surveillance des émissions (mémorisés dans une table de réception RPP reliée à l'unité 19 et référencée 21 en figure 3). A chaque chaîne de mots émise sous le contrôle de l'unité 19 correspond un seul descripteur ("Label"). Etant donné que chaque unité 19 reçoit, pour vérification, tout ce qu'elle émet, elle vérifie au fur et à mesure le débit de chaque chaîne de mots émise.

En réception, il n'y a pas de programmation du débit d'informations, mais détermination dynamique du débit des informations reçues après décodage du profil de synchronisation de chaque mot d'identificateur de données et contrôle de cohérence de la configuration de la partie "profil de synchronisation" de chaque phrase reçue. Pour chacun des mots d'une chaîne de mots reçue, l'unité 19 contrôle la continuité du débit par rapport à la valeur déterminée par le profil de synchronisation. Dans le cas de chaînes de mots programmées en émission et en réception dans un équipement, l'information de programmation statique de débit, faite dans la table de réception RPP, n'est utilisée que pour l'émission.

Le contrôle de l'activité du bus consiste, pour l'unité 19, à déterminer l'activité des signaux de réception pilotés par le convertisseur 17. Un bus inactif correspond, pour l'unité 19, à la détection d'un niveau bas sur ces signaux ou à la détection de l'absence d'impulsions, suivant le type d'interface utilisée. Ce contrôle est indépendant du débit des informations circulant sur le bus, ce qui permet au même protocole d'accès au bus de gérer la prise de décision de l'instant d'émission des équipements ayant des classes différentes de débits. Ces équipements peuvent donc tous partager le bus dans les mêmes conditions.

La programmation des tables d'émission et de réception peut être effectuée aussi bien en-dehors de l'équipement (avant montage-installation) que dans l'équipement, in situ (par téléchargement via l'unité 19).

De façon détaillée, le processus d'émission d'informations par les équipements se passe de la façon suivante.

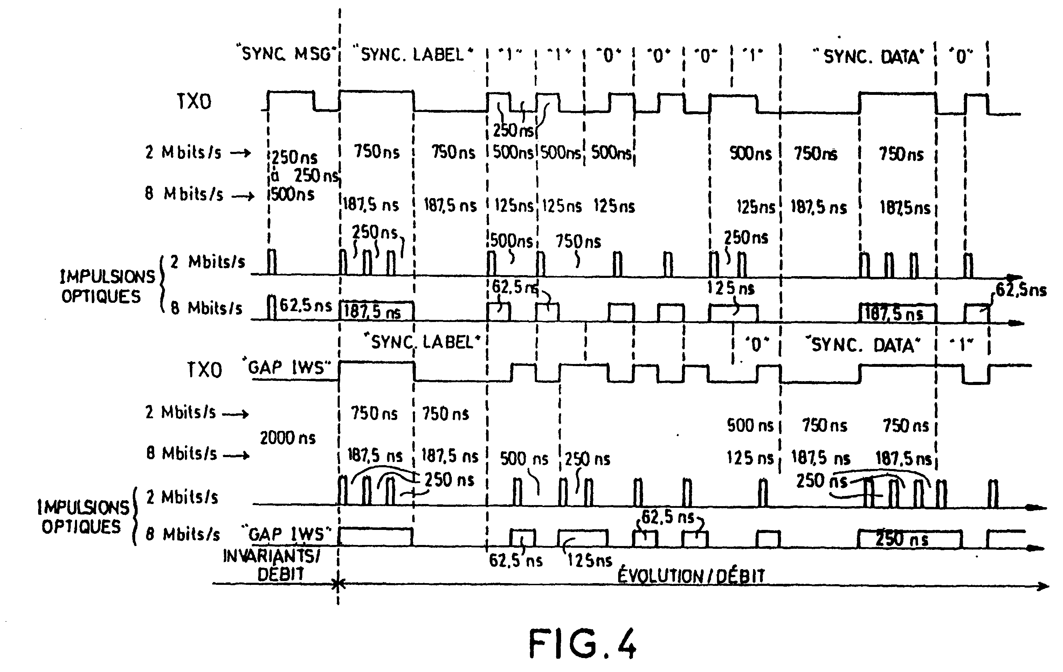

L'unité de contrôle 19 lit dans la table d'émission 20 un champ de sélection spécifique (champ contenu dans chaque descripteur de chaîne de mots, voir figure 4). L'acquisition et l'interprétation de ce champ sont effectuées avant l'émission de chaque chaîne de mots d'un message, permettant ainsi la sélection du débit et du codage de la chaîne de mots (profil référencé "SYNC LABEL" en figure 4 et constituant le début de chaque chaîne de mots). Le gabarit de ce profil de synchronisation est spécifique du débit sélectionné. Ainsi, dans l'exemple de la figure 4, pour le débit de 2 Mbits/s, ce gabarit est un signal rectangulaire commençant par un niveau logique 1 d'une durée de 750 ns, suivi d'un niveau logique 0 de même durée alors que pour le débit de 8 Mbits/s, ce gabarit est un signal rectangulaire de même forme que le précédent, mais dont les deux niveaux logiques ont chacun une durée de 187,5 ns (voir figure 4).

La lecture d'un descripteur de chaîne de mots est réalisée pendant l'émission du gabarit de l'espace inter-chaînes de mots ("InterWordstring Gap" ou "IWG" en figure 4) séparant deux chaîne de mots consécutives d'un message, ou pour la première chaîne de mots d'un message. à l'écoulement de l'événement temporel global pour tous les équipements PSG (ou SG) au début de chaque trame mineure.

L'unité 19 doit pouvoir émettre des chaînes de mots suivant deux codages de base, à savoir le codage logique et le codage physique (voir figure 4), conformément à la programmation du débit. Ces deux codages peuvent être le codage MPPM à impulsions de largeur 62,5 ns et le codage Manchester (ou bien le codage MPPM à impulsions de largeur 31,25 ns).

L'unité 19 surveille la validité du débit des informations émises par l'intermédiaire de ses unités fonctionnelles de "surveillance émission" situées dans le canal de réception, qui est indépendant du canal d'émission. Cette surveillance consiste essentiellement à identifier la classe du débit par l'intermédiaire de la reconnaissance du codage, et à la comparer avec la valeur courante du débit d'émission. La détermination du débit est réalisée par contrôle du format des profils de synchronisation de chaque mot reconstitué à la réception, ce mot pouvant être un label identificateur de données ou une donnée. En cas d'incohérence entre le débit émis et celui déterminé à la réception, l'émission du message est arrêtée jusqu'à la prochaine trame mineure, c'est-à-dire jusqu'au cycle bus suivant.

Le format spatial des informations logiques (voir figure 4) générées par l'unité 19 et restituées par l'unité 17 présente des parties qui sont indépendantes du débit: la synchronisation de message ("SYNC MSG"), l'espace inter-chaînes de mots ("IWG"), et la fin de message pour annoncer l'état de bus inactif. Ceci revient à dire que la variation du débit n'affecte que le format propre des mots contenus dans les chaînes de mots, et non pas du tout le format des informations globales hors chaînes de mots.

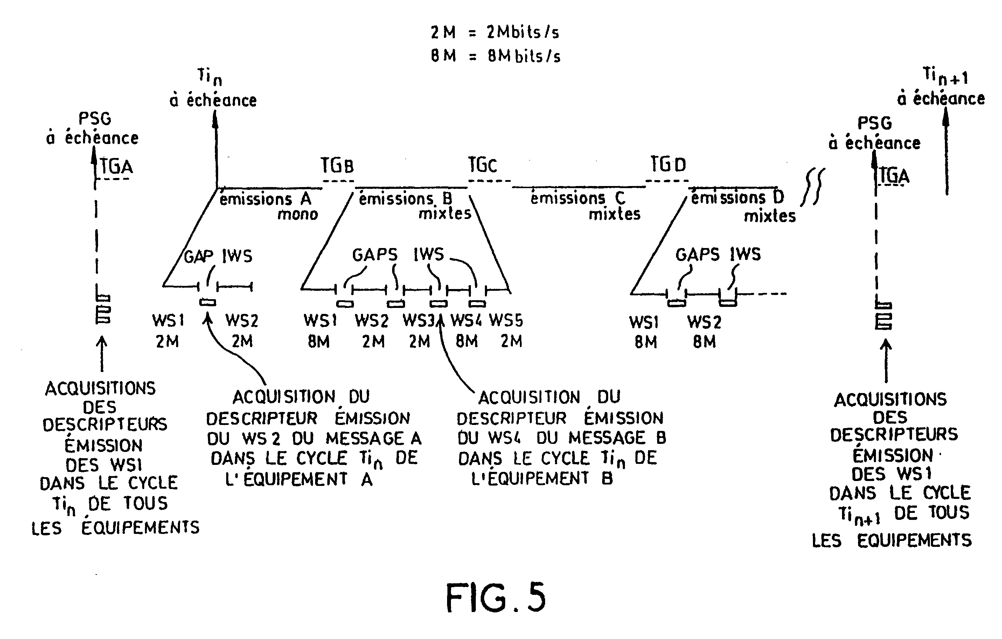

Le format temporel (voir figure 5) des informations gérées par les compteurs génériques ("TI", "TG", "ASG/SG", "PSG") est indépendant de la variation de débit, ce qui signifie que la cydicité des émissions ainsi que l'enchaînement des émissions des divers équipements ne sont pas modifiés. Il est à noter que le débit est un paramètre relatif à chacune des chaînes de mots et non pas au message émis (qui comporte plusieurs chaînes de mots).

En émission, la classe du convertisseur 17 doit être la même que celle de l'unité 19. Le convertisseur 17 utilise les informations TTL codées à 2 et/ou 8 Mbits/s sous forme d'un signal TTL ("TROP") pour les convertir directement en informations optiques, permettant ainsi de supprimer les temps de resynchronisation et de génération d'impulsions électriques, converties en impulsions optiques, entre ces deux couches, c'est-à-dire qu'il n'y a pas besoin de fournir une information supplémentaire de type " valeur de débit et de codage". Ainsi, la conversion effectuée par le convertisseur 17 est transparente vis-à-vis du débit et du codage.

Bien entendu, les caractéristiques du composant émetteur optique (une diode électroluminescente par exemple) doivent être compatibles avec les caractéristiques des impulsions optiques à émettre (largeur des impulsions et distance entre impulsions). Il en est de même pour le composant récepteur optique (un PINFET par exemple).

En réception, la classe du convertisseur 17 doit être la même que celle de l'unité 19.

Le convertisseur 17 peut fonctionner selon l'un des deux principes suivants :
- soit la partie réception effectue la restitution des informations physiques reçues sous la forme de signaux TTL (signaux appelés "RXI" et "RXN" de façon normalisée) codés en code Manchester, quel que soit le codage de l'information physique optique reçue (Manchester ou MPPM). Pour réduire le temps de latence globale de la voie de réception, la restitution des informations est rendue synchrone de l'horloge de l'unité de décodage de l'unité 19,
- soit la partie réception effectue la restitution des informations physiques reçues sous la forme d'un signal TTL (signal "RXOP" selon la norme) dont le codage est directement celui de l'information physique optique reçue (codage MPPM ou Manchester).

La mise en oeuvre du premier principe ci-dessus entraîne la nécessité de prévoir dans le convertisseur 17 deux chaînes fonctionnelles de décodage et de surveillance (des niveaux des signaux et de leur position), et de restitution de l'information physique sous forme logique. Par contre, le second principe ne nécessite pour sa mise en oeuvre qu'une détection des impulsions et leur mise en forme avec une surveillance simplifiée (surveillance de la cohérence des niveaux des impulsions provenant d'un même émetteur).

L'unité 19 est à l'écoute de toute activité du bus restituée par l'intermédiaire du convertisseur 17, qui fournit les signaux électriques RXI et RXN, ou par l'intermédiaire du signal physique RXOP. L'activité du bus étant indépendante du débit d'informations, tout type connu d'unité de contrôle est capable de déterminer l'activité du bus, et donc de mettre en oeuvre correctement le protocole d'émission décrit ci-dessus.

La réception se fait chaîne de mots par chaîne de mots, l'adaptation aux deux classes de débit se faisant phrase par phrase pour un équipement capable de traiter les deux débits.

Un équipement prévu uniquement pour un débit de 2 Mbits/s, et recevant une chaîne de mots à 8 Mbits/s fournit seulement l'indication de l'activité du bus, mais du fait qu'il n'a pas la capacité de reconstituer correctement le mot d'identificateur de données de cette chaîne de mots, il ne produit pas d'indication d'erreur de réception. Il en est de même pour un équipement prévu pour traiter uniquement un débit de 8 Mbits/s recevant une chaîne de mots à 2 Mbits/s.

Un signal d'erreur de réception d'une chaîne de mots n'est envoyé par l'unité 19 au processeur de l'équipement concerné que si cet équipement est programmé (dans la mémoire de personnalisation 21) en tant que destinataire de cette chaîne de mots et que si le mot d'identificateur de données est correctement décodé par l'unité 19.

L'unité de décodage de l'unité 19 comprend deux chaînes fonctionnelles de restitution de l'information logique. A partir des positions temporelles des transitions des signaux RXI, RXN ou du signal physique RXOP fournis par le convertisseur 17, l'unité de décodage détermine le débit courant en décodant le gabarit du profil de synchronisation de chaque mot d'identificateur de données. Une seule des chaînes fonctionnelles doit effectuer un décodage correct, faute de quoi l'information reçue n'est pas interprétable : cela peut être dû au fait que soit aucune des deux chaînes n'est active, soit les deux sont actives en même temps.

L'unité de décodage effectue, grâce à ses deux chaînes fonctionnelles, la surveillance de la qualité de l'information reçue. Pour cela, l'unité de décodage analyse la position des transitions ou des impulsions par rapport à la position attendue ainsi que la largeur des impulsions, ces grandeurs étant fonction du débit détecté. Toute incohérence relevée dans une phrase entraîne la génération d'une indication d'erreur.

Pour obtenir la capacité de traiter deux débits différents, une unité 19 doit comporter les unités précitées ainsi que des unités de surveillance des formats spatiaux de cohérence des mots à l'intérieur d'une chaîne de mots. D'autre part, pour l'émission, elle doit comporter des moyens pour insérer dans chaque message chaque chaîne de mots au bon débit et au bon codage.

Egalement en réception, il n'y a pas de programmation du type de codage ou du débit, mais détection dynamique de la classe de codage et de la classe de débit à partir du gabarit du profil de synchronisation de début de chaque phrase ("SYNC LABEL") avec confirmation de la détection à la réception de chaque mot (synchronisation de donnée).

## Revendications

1. Procédé de communication sur un bus à cohabitation de débits différents, selon lequel on utilise un protocole de transmission unique à multiplexage temporel sur le bus (1, 9-10), tous les équipements (2 à 8, 11.I à 11 N) étant constamment à l'écoute du bus, les équipements ayant à émettre des informations les insérant dans des fenêtres temporelles définies pour l'équipement lui-même et en fonction de l'activité des autres équipements, chaque équipement récepteur détectant l'activité du bus, recréant l'information qui lui est destinée, **caractérisé par le fait que** les informations émises sont groupées en trames se composent chacune d'une ou de plusieurs chaînes de mots associées chacune à un échange d'informations élémentaires entre deux ou plusieurs équipements de même débit d'informations, des trames regroupant des chaînes de mots relatives à des débits d'informations différents, chaque équipement récepteur reconnaissant le type de débit, chaque chaîne de mots étant précédées d'un profil de synchronisation ("SYNC LABEL") de l'identificateur de données indiquant la valeur du débit de ces informations.

2. Procédé selon la revendication 1, **caractérisé en ce que** le débit d'informations est programmé seulement dans la partie émission des équipements (20).

3. Procédé selon l'une des revendications 1 ou 2, **caractérisé en ce que** la détermination du débit instantané d'émission est faite à partir du début de la réception de chaque chaîne de mots émise.

4. Procédé selon la revendication 3, **caractérisé en ce que** la surveillance du débit des informations émises par chaque équipement est réalisée par la partie réception du même équipement recueillant sur le bus les informations émises, par contrôle de la cohérence avec la programmation statique faite dans des descripteurs de réception associés aux chaînes de mots émises (21).

5. Procédé selon l'une des revendications précédentes, **caractérisé en ce qu'**en réception, on détermine dynamiquement le débit d'informations après décodage et contrôle de la cohérence du gabarit d'un « profil de synchronisation ».

## Patentansprüche

1. Verfahren zur Übertragung von Nachrichten unterschiedlicher Bitrate auf einer Busleitung, bei dem man ein gemeinsames Übertragungsprotokoll mit zeitlicher Multiplexierung auf der Busleitung (1, 9, 10) verwendet, wobei alle Geräte (2 bis 8, 11.I bis 11.N) dauernd die Busleitung lesen und die Geräte, die Informationen aussenden wollen, diese Informationen in für das Gerät definierte Zeitfenster und abhängig von der Aktivität der anderen Geräte einfügen, während jedes empfangende Gerät die Aktivität der Busleitung erfaßt und die für dieses Gerät bestimmte Information wiedergewinnt, **dadurch gekennzeichnet, daß** die ausgesendeten Informationen in Rahmen zusammengefaßt sind, die sich je aus einer oder mehreren Ketten von Wörtern zusammensetzen, von denen jede einen Austausch von Elementarinformationen zwischen zwei oder mehreren Geräten mit gleicher Bitrate zugeordnet sind, wobei Rahmen Ketten von Wörtern bezüglich der unterschiedlichen Bitraten von Informationen zusammenfassen und jedes empfangende Gerät den Typ der Bitrate erkennt und wobei jeder Wörterkette ein Synchronisationsprofil ("SYNC LABEL") des Datenidentifikators vorausgeht, der den Wert der Bitrate dieser Informationen angibt.

2. Verfahren nach Anspruch 1, **dadurch gekennzeichnet, daß** die Bitrate der Informationennur im Sendeteil der Geräte (20) programmiert ist.

3. Verfahren nach einem der Ansprüche 1 und 2, **dadurch gekennzeichnet, daß** die Bestimmung der augenblicklichen Sende-Bitrate ab dem Beginn des Empfangs jeder ausgesendeten Wörterkette durchgeführt wird.

4. Verfahren nach Anspruch 3, **dadurch gekennzeichnet, daß** die Überwachung der Bitrate der von jedem der Geräte ausgesendeten Information durch den Empfangsteil des gleichen Geräts realisiert wird, der von der Busleitung die ausgesendeten Informationen aufnimmt, indem es die Kohärenz mit der statischen Programmierung kontrolliert, die in Empfangsdeskriptoren gemacht wird, welche den ausgesendeten Wörterketten (21) zugeordnet sind.

5. Verfahren nach einem der vorstehenden Ansprüche, **dadurch gekennzeichnet, daß** beim Empfang die Bitrate der Informationen nach der Dekodierung und der Kontrolle der Kohärenz der Abmessung eines "Synchronisationsprofils" dynamisch bestimmt wird.

## Claims

1. Process for communicating over a bus simultaneously supporting different bit rates, according to which a single time-division multiplexing transmission protocol is used on the bus (1,9-10), all the equipment (2,8 11.I to 11.N) listening to the bus permanently, the items of equipment which require to send information inserting it into time windows defined for the item of equipment itself and as a function of the activity of the other items of equipment, each item of receiver equipment detecting the activity of the bus, recreating the information intended for it being preceded by a synchronization pattern ("SYNC LABEL") for the data identifier indicating the value of the bit rate for this information.

2. Process according to Claim 1, **characterized in that** the information bit rate is programmed only in the sending part of the equipment (20).

3. Process according to one of Claims 1 or 2, **characterized in that** the determination of the instantaneous sending bit rate is carried out from the start of the reception of each wordstring sent.

4. Process according to Claim 3, **characterized in that** the bit rate of the information sent by each item of equipment is monitored by the receiving part of the same item of equipment which gathers the information sent over the bus, by checking the consistency with the static programming carried out in reception descriptors associated with the wordstrings sent (21).

5. Process according to one of the preceding claims, **characterized in that** on reception, the information bit rate is determined dynamically after decoding and checking the consistency of the template of a "synchronization pattern".
